# EUROPÄISCHE PATENTSCHRIFT

(11) **EP 0 976 001 B1**
(45) Veröffentlichungstag und Bekanntmachung des Hinweises auf die Patenterteilung: **31.07.2002**
(21) Anmeldenummer: 98920515.8
(22) Anmeldetag: 14.04.1998
(51) Int. Cl.: G02B 7/02

(54) **ZWEIACHSIGE SCHWENKVORRICHTUNG**
TWO-AXIS PIVOTING DEVICE
DISPOSITIF DE PIVOTEMENT SUR DEUX AXES

(30) Priorität: 14.04.1997 DE 19715451
(43) Veröffentlichungstag der Anmeldung: 02.02.2000
(73) Patentinhaber: Donner, Wilfried, 33615 Bielefeld (DE)
(72) Erfinder: Donner, Wilfried, 33615 Bielefeld (DE)
(74) Vertreter: Hanewinkel, Lorenz
(86) Internationale Anmeldenummer: EP9802152
(87) Internationale Veröffentlichungsnummer: WO9847034

(56) Entgegenhaltungen:
- GB-A- 2 005 862
- US-A- 4 088 396
- US-A- 5 138 496
- US-A- 5 502 598

## Beschreibung

Die Erfindung betrifft eine Schwenkvorrichtung zum Verschwenken eines darin konzentrisch angeordneten Schwenkobjektivs, um zwei zueinander senkrechte sich in der optischen Achse des Schwenkobjektivs in einem Achsenschnittpunkt kreuzenden Schwenkachsen, wobei das Schwenkobjektiv in einem Objektivhalter gehaltert ist und dieser in Lagern in zwei Freiheitsgraden einer Kugeloberfläche schwenkbar gelagert ist und diese Lager an einem feststehenden Halterahmen angeordnet sind, an dem zwei Schwenkstellmittel fest gehaltert sind, von denen jeweils das eine mit einem meridianen Zahnsegment und das andere mit einem äquatorialen Zahnsegment des Objektivhalters antriebsmäßig verbunden ist und letzteres verschwenkbar und in einer meridianen Ebene verschieblich am Objektivhalter angeordnet ist.

Eine derartige Schwenkvorrichtung ist aus der US 5,502,598 A bekannt. Der kugelförmige Objektivhalter ist auf seiner Kugeloberfläche gelagert. Er weist einen meridian gerichteten Zahnsegmentantrieb und einen orthogonal dazu liegenden äquatorialen Zahnsegmentantrieb auf, dessen Zahnsegment sich auf einem Kugelabschnitt befindet, der um die Achse des äquatorialen Antriebes verschwenkbar ist und dessen Schwenkachse in einer in einer meridianen Ebene gelegenen Nut im Kugelabschnitt verschieblich ist. Das Antriebsritzel kann konisch komplementär zum Zahnsegment ausgebildet sein, und die Zahnradachse ist in einer äquatorialen Nut auf dem Kugelabschnitt geführt. Das Antriebsmoment des Zahnrades am zahnsegment führt jeweils abhängig von seiner Richtung zu einem Auswandern des Kugelabschnittes in der Nut, so daß keine eindeutige Beziehung der meridianen und äquatorialen Objetivverschwenkung zu den Einstelldrehungen der beiden Anriebe besteht, was dem Zweck einer Objektverfolgung genügt aber für eine gezielte Kameraobjektiveinstellung unzureichend ist.

Weiterhin ist aus der DE 296 096 U1 eine Kameraeinstellvorrichtung bekannt, bei der am Fuß eines Objektivrahmens eine zylindrische Lagerung zur Verschwenkung des Rahmens um eine Achse, die die Objektivachse kreuzt, vorgesehen ist und auf dem gelagerten Zylinderabschnitt eine Schwenklagerung um eine vertikale Achse vorgesehen ist, die sich mit der anderen Schwenkachse in der optischen Achse schneidet. Wegen des großen Abstandes der Schwenklager von der optischen Achse ist der an die Objektivstandarte anschließende Balgen bei starken Ausschwenkungen derselben häufig störend für den Strahlengang, und außerdem ist der Balgen mechanisch stark belastet durch eine dabei auftretende Einknickung. Dies zu vermeiden erfordert in vielen Fällen eine neue Vorstellung der gesamten Kameraeinrichtung. Diese Probleme sind beim Einsatz von Weitwinkelobjektiven besonders gravierend.

Es ist Aufgabe der Erfindung, die eingangs bezeichnete Verschwenkvorrichtung, bei der der Halter, die daran befindlichen Bedienelemente zur Einstellung der Verschwenkung und der Balgen feststehend sind und im wesentlichen nur das Schwenkobjektiv darin verschwenkt wird, so zu verbessern, daß die Verschwekung eindeutig mit der Verstellung der Stellelemente zusammenhängt.

Die Lösung ist dadurch gegeben, daß die meridianen und die äquatorialen Zahnsegmente jeweils bezüglich des Halterahmens durch eine Verdrehsicherung auf jeweils einem Kreis um den Achsenschnittpunkt verdrehgesichert geführt sind und jeweils das äquatoriale Zahnsegment in einem Schwenklager verschwenkbar und zu einem ekliptischen Schwenkausgleich in einer Führung auf einem meridianen Kreis auf dem Objektivhalter verschieblich gelagert ist.

Die Verdrehsicherung ist vorzugsweise durch eine halterungsfeste Führungskufe im Zusammenwirken mit einer im Schwenklager des Zahnsegmentes eingebrachten Führungsnut gebildet.

Das Schwenklager des Zahnsegmentes ist vorzugsweise als eine runde Kugelkalottenplatte oder -kappe ausgebildet, die um eine zentrale Achse, vorzusweise in einer Vertiefung des Objektivhalters, drehbar gelagert ist.

Für den ekliptischen Schwenkausgleich ist die Lagervertiefung im Objektivhalter auf einem Meridian langgezogen ausgebildet.

In einer besonders leicht antreibbaren Ausgestaltung der Schwenkvorrichtung sind jeweils zwei äquatoriale Zahnsegmente mit zugehörigen Kegelrädern und zwei meridiane Zahnsegmente mit zugehörigen weiteren Kegelrädern zum Achsenmittelpunkt gespiegelt, wobei die Zahnsegmente einander gegenüberliegend an dem Schwenkobjektivhalter jeweils diesen paarweise angreifend gleichgerichtet schwenken, angeordnet sind und die Kegelräder jeweils auf einem Lagerstift in einem im Halterahmen befindlichen Lagergehäuse mit seitlichen Öffnungen gelagert sind, und das Lagergehäuse mit der Führungskufe jeweils in die Führungsnut, die jeweils in einer der zugehörigen Kugelkalottenplatten ausgebildet ist, abstützend und führend hineinragt, wobei jeweils die meridianen Zahnsegmente je in einer der runden Kugelkalottenplatten ausgebildet sind, die jeweils in dem Objektivhalter nur verschwenkbar eingelagert sind, und jeweils die äquatorialen Zahnsegmente je in einer der runden Kugelkalottenplatten ausgebildet sind, die jeweils in dem Objektivhalter in der als eine Schwenkausgleichsvertiefung ausgebildeten Führung verschwenkbar und meridian verschieblich zu einem ekliptischen Schwenkausgleich eingelagert sind.

Vorteilhaft ist der ringförmige Objektivhalter als ein Kugelabschnitt ausgebildet und sind die beiden ringförmigen Lagerschalen komplementär dazu als Hohlkugelabschnitte ausgebidet. Die beiden Kugelobeflächen geben Führung und Stütze und Lichtabdichtung der beiden ineinanderliegenden Vorrichtungsteile. Um die Gleiteigenschaften der Lagerung zu erhöhen, sind die beiden komplementären Kugeloberflächen vorteilhaft nur teilweise ausgebildet, jedoch insgesamt so daß deren gegenseitige Führung durch eine hinreichende Anzahl von Stützpunkten oder besser Linien- oder Flächenberührungen in allen Schwenklagen eindeutig gewährleistet ist.

Vorteilhaft werden die Zahnsegmente der Schwenkantriebe des Objektivhalters getrennt von diesem gefertigt und in Kugelkalottenplatten eingebracht, die in dazu passenden Ausnehmungen des Objektivhalters in dessen Oberfläche eingebettet werden. Es ist vorteilhaft vorgesehen, in der einen Schwenkachse die Kugelkalottenplatte um ihre Mittelachse drehbar zu lagern und in der zweiten Schwenkachse eine Drehung und eine meridiane Ausgleichsverschiebung vorzusehen, die notwendig ist, wenn in der erste Achse bereits eine Verschwenkung stattgefunden hat und danach in der zweiten Achse die weitere Verschwenkung vorgenommen werden soll. Diese zweite Achse weist dann gemäß der jeweiligen verschwenkung um die erste Achse nach Art der unterschiedlichen Äquatorlage zur Ekliptik, d.h. der ortsfesten Schwenkachslage im Halter, auf der inneren Kugel mit zunehmender Verschwenkung der zweiten Achse eine zunehmende Neigung zur Ausgangslage auf. Es tritt also ein meridiane Auswanderung der Achslage der im Halter feststehenden zweiten Schwenkachse auf der Innenkugel, d. h. dem Objek-tivhalter, auf, wenn eine Schwenkung um beide Achsen erfolgt ist.

Der Aufbau der Kugelschalenabschnitte ermöglicht es, zwischen diesen die Antriebselemente einzubetten. Besonders vorteilhaft ist es, den von den Einstellelementen ausgehenden Antrieb über koaxiale Stellringe auf die Antriebsritzel zu übertragen, welche die Zahnsegmente des Objektträgers verstellen. Die beiden koaxialen Stellringe sind aufeinander gleitend in einer Ringausnehmung in einer der Kugelschalen gelagert und mit Zahnkranzsegmenten versehen. Eines der Zahnkranzsegmente tritt jeweils mit dem zugehörigen Einstellantrieb in Kontakt und zwei einander gegenübliegende Zahnkranzsektoren treiben jeweils ein zugehöriges Einstellkegelrad symmetrisch zum Mittelpunkt der Kugel an. Die beiden Einstellringe haben gegeneinader versetzt angeordnete Zahnkranzsektoren, und diese sind in zugehörigen Ausnehmungen der Kugelschale geführt.

Besonders vorteilhaft hat es sich erwiesen, die kegelradseitigen Zahnkranzsektoren an vom Einstellring sich senkrecht erstreckenden Stegen anzuordnen, so daß in diesen Sektoren jeweils durch einen Zylinderabschnitt ein L-förmig und gekrümmt verstärktes Profil gegeben ist.

Der weitere, antriebsseitige Zahnkranzsektor ist jeweils randseitig stirnseitig angebracht und tritt mit einem Stirnrad in Wirkverbindung, welches vorzugsweise über ein Winkelgetriebe von dem Einstellknopf aus verstellbar ist. Die gesamte Getriebeübersetzung ist zweckmäßig so gewählt, daß annährernd eine Einstellknopfumdrehung den gesamten Schwenkbereich abdeckt. Demgemäß ist eine Skalierung des Einstellknopfes mit +/- 15° vorgesehen; denn das ist zweckmäßig der maximale Schwenkbereich in jeder Achse.

Die Kegelräder, die in die Zahnsegmente der Kugelkalottenplatten eingreifen, sind konisch zur Mitte, d.h. dem Achsenschnittpunkt, ausgebildet. Auf einem Teil der Kegelradverzahnung greift jeweils die komplementäre Verzahnung des Einstellringes an, und auf einem weiteren Teil treibt das Kegelrad das komplementäre Zahnsegment der Kalotte an und bewirkt somit die Verschwenkung des Kugelabschnittes.

Vorteilhaft sind die Kegelräder jeweils in kleinen Buchsen gelagert, die von einem Lagerstift durchsetzt sind. Dieses Kegelradgehäuse ist jeweils mit seitlichen Öffnungen versehen, in die die zugehörigen Zahnsegmente oder Zahnsektoren des An- oder Abtriebes eingreifen. Das Gehäuse des Kegelrades ist zum einen zwischen den Lagerschalen fixiert und greift zum anderen mit seinem nach innen gerichteten Ende, das kufenartig ausgebildet ist, in eine Führungsnut der zugehörigen Kugelkalottenplatte ein, die randseitig das Zahnsegment trägt. Die Führungskufen sind jeweils im Halter feststehend in jeweils eine der beiden Schwenkrichtungen orientiert gehalten, und demgemäß sind auch die Führungsnuten auf den Kugelkalottenplatten stets in diesen räumlich festen senkrecht aufeinanderstehenden Großkreisen, auf denen die Verschwenkung erfolgt, orientiert geführt. Durch die Verdrehbarkeit der Kugelkalottenplatten und die meridiane Verschiebkichkeit eines gegenüberliegenden Paares der Kugelkalottenplatten auf dem Objektivhalter verlagern sich diese Großkreise bezüglich eines objektivhalterbezogenen Koordinatensystems in definierter Weise.

Die einzelnen Bauteile sind vorzugsweise aus glasfaserverstärktem Kunststoff, sogenanntem GFK, hergestellt und durch Tempern formstabilisiert oder aus Metallfeinguß, insbes. Leichtmetallfeinguß, hergestellt.

Vorteilhafte Ausgestaltungen sind in den Figuren 1 bis 15 dargestellt.
- Fig. 1: zeigt eine Seitenansicht der Vorrichtung;
- Fig. 2: zeigt eine Frontansicht, hälftig;
- Fig. 3: zeigt eine Aufsicht;
- Fig. 4: zeigt eine Lagerschale im Schnitt;
- Fig. 5: zeigt dieselbe Lagerschale in Frontansicht;
- Fig. 6: zeigt einen mittigen Schnitt vertikal teilbestückt;
- Fig. 7: zeigt einen Schnitt durch die obere Hälfte;
- Fig. 8: zeigt einen horizontalen Schnitt bestückt;
- Fig. 9: zeigt eine Stellknopfabwicklung;
- Fig. 10: zeigt einen Axialschnitt durch einen Stellantrieb;
- Fig. 11: zeigt die beiden Stellringe in Aufsicht hälftig;
- Fig. 12: zeigt einen Kugelkalotte in Aufsicht;
- Fig. 13: zeigt die Kugelkalotte im Längsschnitt;
- Fig. 14: zeigt die Kugelkalotte im Querschnitt;
- Fig. 15: a bis d zeigen das Kegelrad mit dem Lagergehäuse in Eplosionsdarstellung von verschiedenen Seiten.

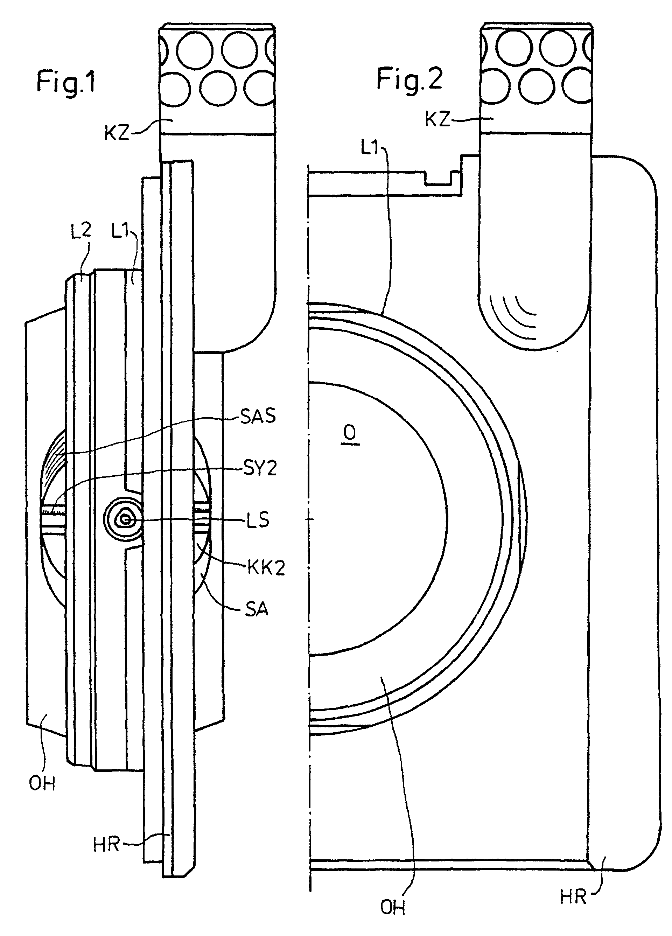

Die Gesamtvorrichtung ist in einer Seitenansicht in Figur 1 zu sehen. Der Schwenkantrieb der Z-Achse KZ ist nach oben aus dem Halterahmen HR herausgeführt und endet in einem Einstellknopf. In dem Halterahmen HR sind zwei Lagerschalenhälften L1, L2 eingesetzt, in denen der kugelabschnittförmige Objekthalter OH in zwei Achsen schwenkbar gelagert ist. In dieser Kugel ist eine Kugelkalottenplatte KK2, die kreisförmig ausgebidet ist, eingelegt und sowohl drehbar als auch verschieblich in der Schwenkausgleichsvertiefung SA gehalten. In der Kugelkalottenplatte KK2 befindet sich das Zahnsegment SY2, welches für das Verschwenken mit einem Kegelrad zusammenarbeitet, das mit dem Lagerstift LS in der Kugelschale drehbar gelagert ist. Die Auswanderung der Kugelkalottenplatte KK2 in der Schwenkausgleichsvertiefung SA bei einer Doppelverschwenkung des Objektivhalters OH läßt sich an einer in der Vertiefung SA befindlichen Skala SAS ablesen und in einfacher Weise zur korrigierenden Umrechnung des Verschwenkmaßes, das am Einstellknopf KY mit festem Ortsbezug gewonnen wird, auf ein Koordinatensystem auf der verschwenkten Kugeloberfläche des Objektivhalters OH nutzen.

Die Halbansicht von der Vorderseite der Vorrichtung ist in Figur 2 darstellt, wo wiederum das Verschwenkstellmittel KZ für die vertikale Achse an dem Halterahmen HR sowie der Objektivhalter OH für das Objektiv O in der Lagerschalenhälfte L1 konzentrisch angeordnet sichtbar sind.

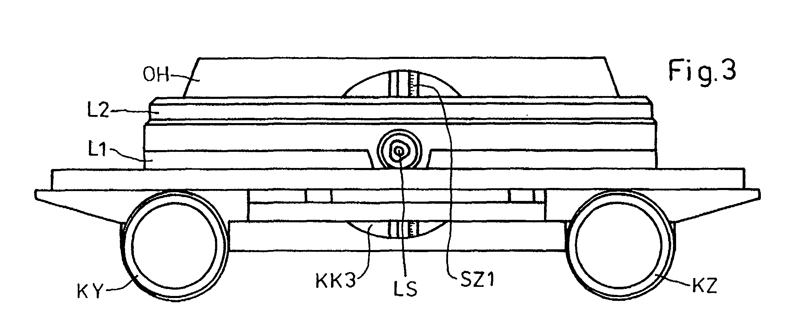

Figur 3 zeigt in der Aufsicht die beiden Schwenkstellmittel KY, KZ für die beiden Schwenkachsen und die obere Kugelkalottenplatte KK3, die für die Schwenkung um die horizontalen Achse das Zahnsegment SZ1 trägt und in den Objektivhalter OH eingelagert ist. Weiterhin ist der Lagerstift LS für das Kegelrad sowie dessen Lagergehäuse zu erkennen, welches in die Lagerschalen L1, L2 eingesetzt ist.

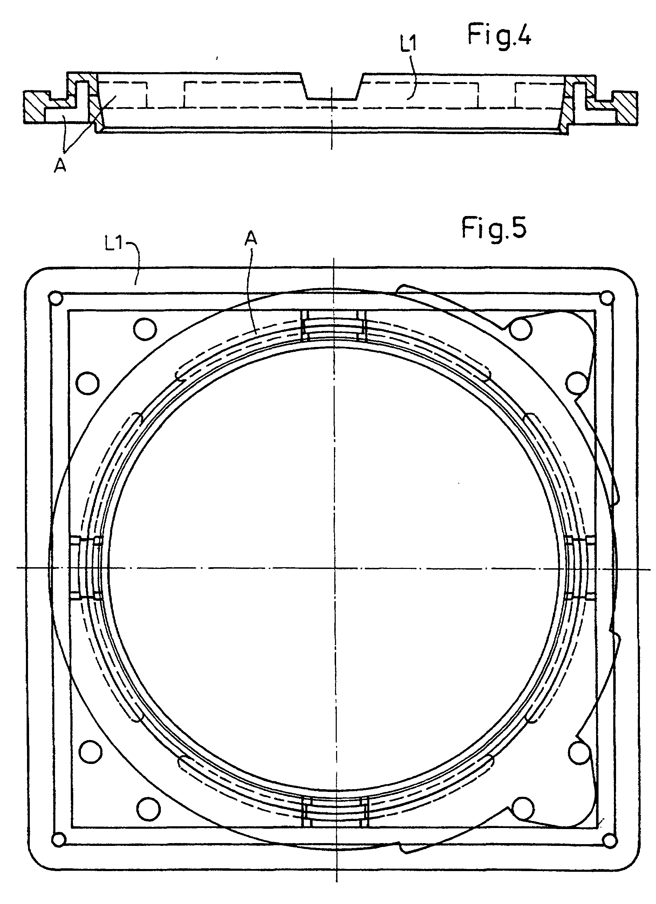

Figur 4 zeigt einen Schnitt durch die eine Lagerschale L1, welche eine radiale Ausnehmung A aufweist, die sektorweise sich auch achsparallel erstreckt, was durch die gestrichelten Linien ersichtlich ist.

In Figur 5 ist eine Aufsicht auf die eine Lagerschale L1 gezeigt, und auch in dieser ist gestrichelt jeweils die Ausparung A zu sehen, in der sich das Zahnkranzsegment beim Verschwenken verschiebt, wenn es das zugehörige Kegelrad antreibt. Es sind vier Lagerausnehmungen für die Kegelradgetriebe vorgesehen, von denen jeweils zwei miteinander gegenüberliegend korrespondieren und einen symmetrischen Schwenkantrieb komplementär bilden.

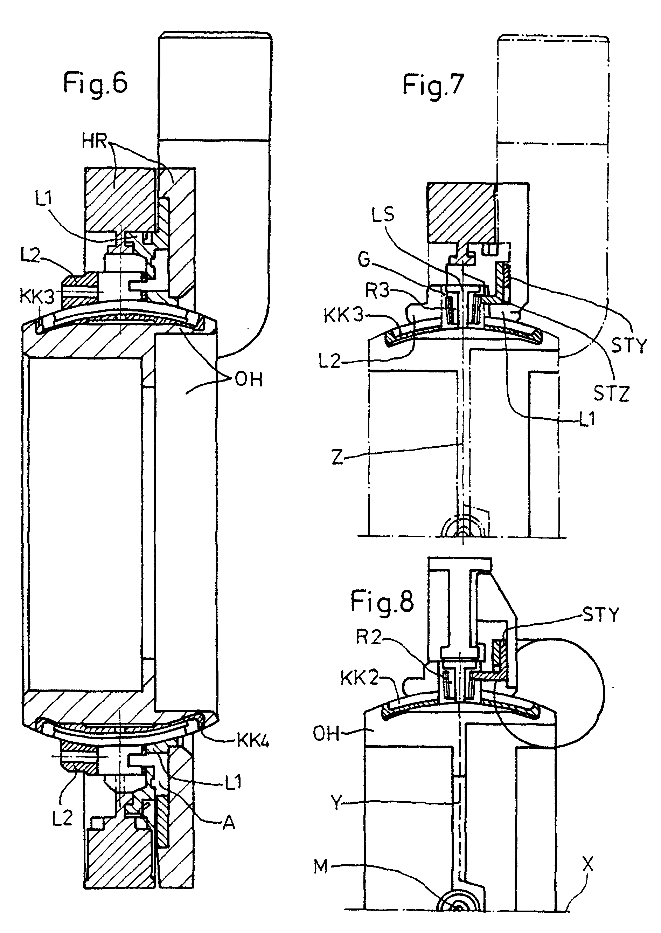

Figur 6 zeigt einen Schnitt durch den Aufbau der Vorrichtung in vertikaler Richtung, wobei die Kegelräder und Einstellringe nicht bestückt sind. Der innere Objektivhalter OH ist oben- und untenseitig mit einer Kugelkalottenplatte KK3, KK4 bestückt. Der Objektivhalter ist vorzugsweise zur Aufnahme von Wechselobjektiven mit einem Bajonettanschluß versehen. Diese Anordnung insgesamt ist in den beiden Kugelschalenabschnitten L1, L2 verschwenkbar gelagert. Letztere sind in dem Halterahmen HR befestigt, der wiederum aus zwei Rahmenteilen zusammengesetzt ist. Von diesen ist einer beispielsweise der Halterahmen eine Objektivstandarte, in die der andere Rahmen mit der ganzen Verstellvorrichtung herausnehmbar aufgenommen ist.

Figur 7 zeigt die obere Hälfte des Schnittes mit der Bestückung der Antriebselemente. In der L-förmigen Tasche der Lagerschale L1 sind die beiden Stellringe STY, STZ zirkular verschieblich koaxial gelagert. Der eine der Stellringe STZ weist im Schnittbild einen Winkelschenkelsektor auf, der stirnseiig eine Kegelradverzahnung trägt, welche in dem Kegelrad R3 kämmt. Dieses Kegelrad R3 ist auf einem Lagerstift LS drehbar gelagert in ein Lagerhäuse G eingesetzt, welches sich bis in die Kugelkalottenplatte KK3 erstreckt und die Zahnung dort seitlich austreten läßt, welche in die Segmentverzahnung der Kugelkalottenplatte auf einer Seite eingreift. Das Kegelrad R3 ist so ausgebildet, daß seine Flanken auf den Mittelpunkt der Kugeloberfläche des Objektivhalters zulaufen. Das Kegelrad R3 bildet sowohl mit dem Zahnsegment der Kugelkalottenplatte KK3 als auch mit der Verzahnung des Stellrings STZ jeweils ein Winkelgetriebe.

Figur 8 zeigt einen horizontalen Schnitt mit den Getriebeelementen bestückt. Hierbei ist der zweite Stellring STY mit dem winkligen Segmentfortsatz versehen gezeigt, der stirnseitig die Verzahnung trägt, welche mit dem Kegelrad R2 zusammenarbeitet. Dieses ragt zusammen mit dem Lagergehäuse in die Kugelkalottenplatte KK2 hinein, welche wiederum in den Objektivhalter OH eingebettet ist. Dieser Antrieb dient der Verschwenkung der Y-Achse, also der horizontalen Achse um den Mittelpunkt M, in dem sich die zentrale Achse X des Obejektivhalter OH und auch die vertikale Achse Z schneiden.

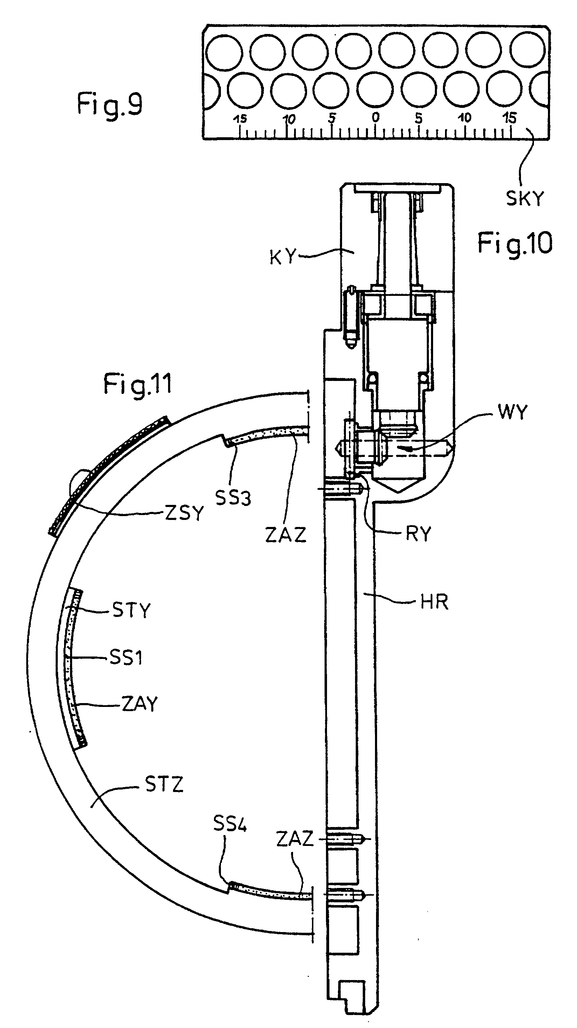

Figur 9 zeigt eine Abwicklung der Einstellknopfoberfläche SKY, die Griffvertiefungen und insbes. eine Skalierung von +/- 15° trägt, was den Schwenkwinkeln dieses Antriebes entspricht. Von dem Einstellknopf KY aus führt eine Antriebsachse zu einem Winkelgetriebe WY, das in dem Halterahmen HR gelagert ist und ein stirnseitig gezahntes Zahnrad RY antreibt. Dieses greift in das Zahnsegment ZSY des Stellringes STY, welcher in Halbansicht in Fig. 11 zum größten Teil verdeckt hinter den weiteren Stellring STZ angeordnet ist. Eines der Zahnkranzsegmente SS1 ist an dem Zahnkranzabschnitt ZAY zu sehen, welcher innenseitig hervorschaut. Vorzugsweise ist ein entsprechender Zahnkranzabschnitt gegenüberliegend, nicht dargestellt, angeordnet. Der vorderseitig gezeigte weitere Stellring STZ ist mit seinen beiden Zahnkranzabschnitten ZAZ und den darauf befindlichen Zahnsegmenten SS3, SS4 oben und unten im Bild zu sehen. Ein randseitiges Antriebszahnsegment befindet sich an der unsichtbaren Hälfte des Stellringes.

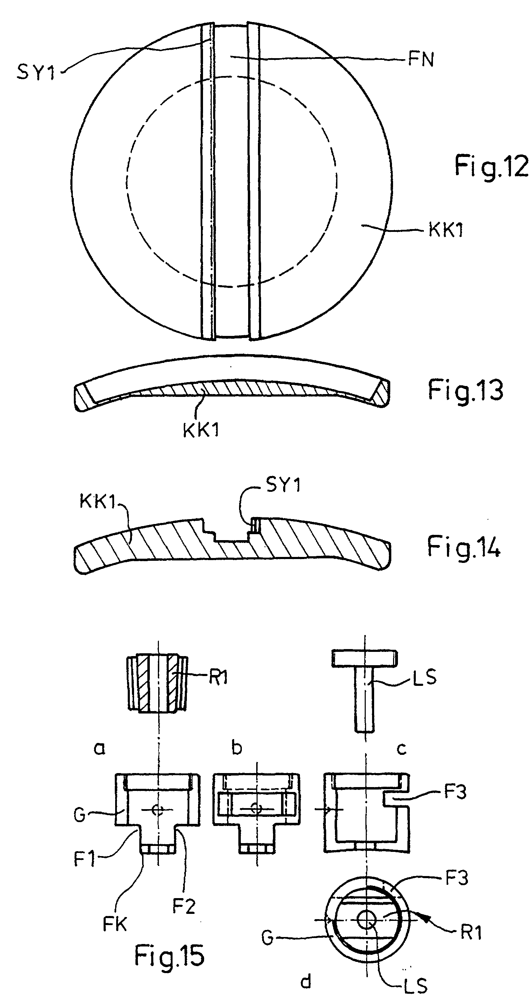

Fig. 12 zeigt eine Kugelkalottenplatte KK1 in Aufsicht, welche quer darüber verlaufend eine Führungsnut FN aufweist, die an einer Seite das Zahnsegment SY1 trägt.

Fig. 13 zeigt einen Längsschnitt durch die Kugelkalottenplatte KK1 auf die zahnfreie Führungskante gesehen.

Fig. 14 zeigt einen Querschnitt durch die Kugelkalottenplatte KK1, wobei auf der einen Seite des Einschnittes die Verzahnung des Zahnsegmentes SY1 sichtbar ist.

Fig. 15 zeigt im Teilbild a das Lagergehäuse G für das Kegelras R1 und dieses selbst. Das Gehäuse weist untenseitig eine Führungskufe FK auf, seitlich derer zwei Ausschnitte F1, F2 liegen, aus denen ein Teilbereich der Zahnung des Kegelrades im eingesetzten Zustand heraustritt. Das Teilbild b zeigt das Gehäuse von der entgegengestzten Seite, wo ein weiterer Ausschnitt zu erkennen ist, der auch bei dem um 90° gedrehten Bild c mit F3 bezeichnet zu sehen ist. Dieser dritte Ausschnitt ist für das Eingreifen der Zahnsegmente des Stellringes vorgesehen. Mit dem Lagerstift LS wird das Kegelrad in dem Gehäuse gelagert. Die Deckplatte am Lagerstift gibt einen weiteren sicheren Halt im Gehäuse. Das Teilbild d zeigt von der gesamten Kegelradhalteranordnung nochmals eine Aufsicht, die die Einzelheiten verdeutlicht. Eine Zentriervertiefung auf der Seite des Gehäuses dient dessen Verdrehschutz nach dem Einbau.

## Patentansprüche

1. Schwenkvorrichtung zum Verschwenken eines darin konzentrisch angeordneten Schwenkobjektivs (O), um zwei zueinander senkrechte sich in der optischen Achse (X) des Schwenkobjektivs in einem Achsenschnittpunkt (M) kreuzenden Schwenkachsen (Y, Z), wobei das Schwenkobjektiv (O) in einem Objektivhalter (OH) gehaltert ist und dieser in Lagern (L1, L2) in zwei Freiheitsgraden einer Kugeloberfläche schwenkbar gelagert ist und diese Lager (L1, L2) an einem feststehenden Halterahmen (HR) angeordnet sind, an dem zwei Schwenkstellmittel (KY, KZ) fest gehaltert sind, von denen jeweils das eine mit meridianen Zahnsegmenten (SZ1, SZ2) und das andere mit äquatorialen Zahnsegmenten (SY1, SY2) des Objektivhalters (OH) antriebsmäßig verbunden ist und letzteres und in einer meridianen Ebene verschieblich am Objektivhalter (OH) angeordnet ist, wobei die meridianen und die äquatorialen Zahnsegmente (SZ1, SZ2; SY1, SY2) jeweils bezüglich des Halterahmens (HR) durch eine Verdrehsicherung (FK, FN) auf jeweils einem Kreis um den Achsenschnittpunkt (M) verdrehgesichert geführt sind und jeweils das äquatoriale Zahnsegment (SY1, SY2) in einem Schwenklager (KK1, KK2) verschwenkbar und zu einem ekliptischen Schwenkausgleich in einer Führung (SA) auf einem meridianen Kreis auf dem Objektivhalter (OH) verschieblich gelagert ist.

2. Schwenkvorrichtung nach Anspruch 1, wobei die verdrehsicherung (FK, FN) jeweils aus einer Führungskufe (FK), die in eine Führungsnut (FN) des Schwenklagers (KK1 - KK4) eingreift, besteht.

3. Schwenkvorrichtung nach Anspruch 1 oder 2, wobei die Schwenklager (KK1 - KK4) jeweils als eine Kugelkalottenplatte oder -kappe (KK1, KK2) ausgebildet sind.

4. Schwenkvorrichtung nach einem der Ansprüche 1 bis 3, wobei jeweils zwei äquatoriale Zahnsegmente (SY1, SY2) mit zugehörigen Kegelrädern (R1, R2) und zwei meridiane Zahnsegmente (SZ1, SZ2) mit zugehörigen weiteren Kegelrädern (R3, R4) zum Achsenmittelpunkt (M) gespiegelt, wobei die Zahnsegmente (SY1, SY2; SZ1, SZ2) einander gegenüberliegend an dem Schwenkobjektivhalter (OH) jeweils diesen paarweise angreifend gleichgerichtet schwenken, angeordnet sind und die Kegelräder (R1 - R4) jeweils auf einem Lagerstift (LS) in einem im Halterahmen (HR) befindlichen Lagergehäuse (G) mit seitlichen Öffnungen (F1, F2, F3) gelagert sind, und das Lagergehäuse (G) mit der Führungskufe (FK) jeweils in die Führungsnut (FN), die jeweils in einer der zugehörigen Kugelkalottenplatten (KK1, - KK4) ausgebildet ist, abstützend und führend hineinragt, wobei jeweils die meridianen Zahnsegmente (SZ1, SZ2) je in einer der runden Kugelkalottenplatten (KK3, KK4) ausgebildet sind, die jeweils in dem Objektivhalter (OH) nur verschwenkbar eingelagert sind, und jeweils die äquatorialen Zahnsegmente (SY1, SY2) je in einer der runden Kugelkalottenplatten (KK1, KK2) ausgebildet sind, die jeweils in dem Objektivhalter (OH) in der als eine Schwenkausgleichsvertiefung (SA) ausgebildeten Führung (SA) verschwenkbar und meridian verschieblich zu einem ekliptischen Schwenkausgleich eingelagert sind.

5. Schwenkvorrichtung nach Anspruch 1, wobei die Zahnsegmente (SY1, SY2; SZ1, SZ2) über die mit ihren Achsen und Flanken zum Achsenschnittpunkt (M) gerichteten Kegelräder (R1 - R4) angetrieben sind, die jeweils in einer der als ringförmige hohlkugelabschnittförmige Lagerschalen (L1, L2) ausgebildeten Lagern drehbar gelagert sind und mit einem gezahnten Teilbereich jeweils mit einem Stellringzahnsegment (SS1 - SS4) eines von zwei Stellringen (STY, STZ) kämmen, die koaxial in einer der Lagerschalen (L1, L2) drehbar gelagert sind.

6. Schwenkvorrichtung nach Anspruch 5 wobei die beiden Stellringe (STY, STZ) jeweils mit einem daran angebrachten Zahnsegment (ZSY, ZSZ) mit einem Einstellzahnrad (RY, RZ) kämmen.

7. Schwenkvorrichtung nach Anspruch 6, wobei die Einstellzahnräder (RY, RZ) jeweils über ein Winkelgetriebe (WY, WZ) mit einem zugehörigen skalierten Stellknopf (KY, KZ) antriebsmäßig verbunden sind.

8. Schwenkvorrichtung nach einem der vorstehenden Ansprüche wobei der Halterahmen (HR) eine Objektivstandarte oder ein Frontrahmen einer Kamera ist und die Schwenkvorrichtung mit einer Lichtdichtung abgedichtet ist.

9. Schwenkvorrichtung nach Anspruch 8, wobei an dem Frontrahmen oder der Objektivstandarte ein Auszugsbalgen oder ein Kameragehäuse lösbar lichtdicht angeschlossen ist.

10. Schwenkvorrichtung nach einem der vorstehenden Ansprüche, wobei die beiden Schwenkwinkel des Schwenkobjektivs (O) jeweils mindestens +/- 15° betragen.

11. Schwenkvorrichtung nach einem der vorstehenden Ansprüche, wobei das Schwenkobjektiv (OH) ein Wechselobjektiv ist.

12. Schwenkvorrichtung nach einem der Ansprüche 5 bis 11, wobei die Lagerschalen (L1, L2), die Stellringe (STY, STZ), der Objektivhalter (OH) und/oder die Kugelkalottenplatten (KK1 - KK4) aus getempertem GFK oder Leichtmetallfeinguß bestehen.

13. Schwenkvorrichtung nach Anspruch 10, wobei die Schwenkstellmittel (KY, KZ) jeweils eine derartige Gesamtuntersetzung aufweisen, daß annähernd eine Umdrehung des Stellknopfes (KY, KZ) einer Verschwenkung des Objektivhalters (OH) um den maximalen Schwenkwinkel entspricht.

14. Schwenkvorrichtung nach Anspruch 1, wobei die Stellringe (STY, STZ) radial gerichtet angeordnet flach ausgebildet sind und deren Stellringzahnsegmente (SS1, SS2; SS3, SS4) auf dazu senkrechten Zahnkranzabschnitten (ZAY, ZAZ) angeordnet sind, die mit dem jeweils zugeordneten Kegelrad (R1 - R4) je ein Winkelgetriebe bilden.

15. Schwenkvorrichtung nach Anspruch 14, wobei die Stellringe (STY, STZ) aufeinander gleitend und mit zirkular gegeneinander versetzten Zahnkranzabschnitten (ZAY, ZAZ) in jeweils einer radialen und sektoriell achsparallel erweiterten zylinderabschnittförmigen Ausnehmung (A) der Lagerschale (L1) zirkular verschieblich gelagert sind.

16. Schwenkvorrichtung nach Anspruch 4, wobei in der Schwenkausgleichsvertiefung (SA) eine Skalierung (SAS), die ein Maß der Achsauswanderung angibt, eingebracht ist.

## Claims

1. Slewing mechanism for the swinging of a pivoting lens (O), concentrically mounted therein, around two pivoting axes (Y, Z), vertical to one another and intersecting in the optical axis (X) of the pivoting lens at a common apex (M), the pivoting lens (O) being held in a lens holder (OH) and the latter running traversably on bearings (L1, L2) in two degrees of freedom of a spherical surface, and these bearings (L1, L2) being mounted on a fixed retaining frame (HR), to which two slewing means of adjustment (KY, KZ) are permanently fastened, which are drivewise connected individually, the one to meridian toothed quadrants (SZ1, SZ2) and the other to equatorial toothed quadrants (SY1, SY2) of the lens holder (OH), the meridian and equatorial toothed quadrants (SZ1, SZ2, SY1, SY2) each being guided, torsionally secure in relation to the retaining frame (HR), through a locking safety mechanism (FK, FN), each on an individual circuit around the common apex (M), and each of the equatorial toothed quadrants (SY1, SY2) being traversable in a drag bearing (KK1, KK2) and running slidably in a guide (SA) on a meridian circuit on the lens holder (OH) for ecliptical slewing compensation.

2. Slewing mechanism as Claim 1, in which the locking safety mechanism (FK, FN) in each case consists of a guide runner (FK), which engages with a guiding groove (FN) of the drag bearing (KK1 - KK4):

3. Slewing mechanism as Claim 1 or 2, in which the drag bearing (KK1 - KK4) in each case takes the form of a universal ball joint plate or cap (KK1, KK2).

4. Slewing mechanism as one of Claims 1 to 3, in which each of two equatorial toothed quadrants (SY1, SY2) is reflected with the associated bevel wheels (R1, R2) and each of two meridian toothed quadrants (SZ1, SZ2) is mounted reflected, with additional associated bevel wheels (R3, R4) in relation to the common apex (M), and in which the toothed quadrants (SY1, SY2; SZ1, SZ2) lying opposite one another each turn on the pivoting lens holder (OH), parallel to this and engaging in pairs, and the bevel wheels (R1 - R4) each run on bearings on a bearing pin (LS) in a bearing housing (G) located in the retaining frame (HR), with side openings (F1, F2, F3), and the bearing housing (G) with the guide runner (FK) projects in each case into the guiding groove (FN), which, in each case, is formed in one of the associated universal ball joint plates (KK1-KK4), in a supporting and guiding manner, and in which the meridian toothed quadrants (SZ1, SZ2) are each formed in one of the universal ball joint plates (KK3, KK4), which in each case can be inserted only swingably in the lens holder (OH), and in which each of the equatorial toothed quadrants (SY1, SY2) is formed in one of the universal ball joint plates (KK1, KK2), each of which is swingably mounted in the lens holder (OH), in the guide (SA) formed as a slewing compensation indentation (SA),and is slidably inserted in relation to an ecliptical slewing compensation.

5. Slewing mechanism as Claim 1, in which the toothed quadrants (SY1, SY2; SZ1, SZ2) are driven by means of bevel wheels (R1 - R4), parallel to their axes and flanks in relation to the common apex (M), each of which is rotatably mounted in one of the bearing shells, which take the form of annular hollow sphere sections and each engage, with a toothed section, with a toothed quadrant (SS1-SS4) of one of two adjusting rings (STY, STZ), which are coaxially rotatably mounted in one of the bearing shells (L1, L2).

6. Slewing mechanism as Claim 5, in which the two adjusting rings (STY, STZ) each engage, with a toothed quadrant mounted thereon (ZSY, ZSZ), with an adjusting gearwheel (RY, RZ).

7. Slewing mechanism as Claim 6, in which the adjusting gearwheels (RY, RZ) are each drivewise connected to an associated scaled adjusting knob (KY, KZ) by means of an angular gear (WY, WZ).

8. Slewing mechanism as one of the preceding claims, in which the retaining frame (HR) is a lens panel or a front frame of a camera and the slewing mechanism is sealed with a light seal.

9. Slewing mechanism as Claim 8, in which an extension bellows or a camera housing is detachably connected, in a light-tight manner, to the front frame or the lens panel.

10. Slewing mechanism as one of the preceding claims, in which the two pivoting angles of the pivoting lens (O) each amount to at least ± 15°.

11. Slewing mechanism as one of the preceding claims, in which the pivoting lens (OH) is an interchangeable lens.

12. Slewing mechanism as one of the preceding claims 5 to 11, in which the bearings (L1, L2), the adjusting rings (STY, STZ), the lens holder (OH) and / or the universal ball joint plates (KK1 - KK4) are made of malleablised glass fibre reinforced plastic or light metal lost-wax casting.

13. Slewing mechanism as Claim 10, in which the slewing means of adjustment (KY, KZ) each have a total reduction of such a type that one rotation of the adjusting knob (KY, KZ) approximately corresponds to a sweep of the lens holder (OH) through the maximum pivoting angle.

14. Slewing mechanism as Claim 1, in which the adjusting rings (STY, STZ) are mounted radially orientated and flat-formed, and their adjusting ring toothed quadrants (SS1, SS2; SS3, SS4) are mounted on gear rim sections (ZAY, ZAZ) vertical to it, which each form an angular gear with the individually allocated bevel wheel (R1 - R4).

15. Slewing mechanism as Claim 14, in which the adjusting rings (STY, STZ) slide over one another and run around a circuit on bearings with circularly reciprocally offset gear rim sections (ZAY, ZAZ), each in an expanded recess (A) with a cylindrical section form, radially and sectorially parallell to the axis of the bearing (L1).

16. Slewing mechanism as Claim 4, in which a scale (SAS) is provided for in the slewing compensation indentation (SA) which provides a dimension for the axial drift.

## Revendications

1. Dispositif de pivotement accueillant concentriquement un objectif (O) et le faisant pivoter sur deux axes (Y, Z) qui sont disposés perpendiculairement par rapport l'un à l'autre et se croisent dans l'axe optique (X), au point d'intersection (M), ledit objectif (O) étant maintenu dans un porte-objectif (OH) monté, pivotant dans deux degrés de liberté d'une surface sphérique, dans des paliers (L1, L2) qui sont disposés sur un cadre de maintien (HR) fixe auquel deux organes de commande (KY, KZ) sont fixés, l'un étant, au point de vue entraînement, relié à des segments dentés méridiens (SZ1, SZ2) et l'autre à des segments dentés équatoriaux (SY1, SY2) du porte-objectif (OH), le dernier étant déplaçable sur un niveau méridien,
les segments dentés méridiens et équatoriaux (SZ1, SZ2; SY1, SY2) étant conduits chacun, par rapport au cadre de maintien (HR), circulairement autour du point d'intersection (M) par un dispositif de guidage (FK, FN) et chaque segment équatorial (SY1, SY2) étant monté dans un palier de pivotement respectif (KK1, KK2) et pouvant être déplacé, sur le porte-objectif (OH), dans un dispositif de guidage (SA), sur un cercle méridien, aux fins de compensation écliptique.

2. Dispositif de pivotement selon la revendication 1,
le dispositif de guidage (FK, FN) consistant en un patin qui s'engage dans une rainure de guidage (FN) du palier de pivotement (KK1 - KK4).

3. Dispositif de pivotement selon la revendication 1 ou 2,
les paliers de pivotement (KK1 - KK4) étant conçus, chacun, en forme de capuchon ou de plaque à calotte sphérique (KK1, KK2).

4. Dispositif selon l'une des revendications 1 à 3,
deux segments dentés équatoriaux (SY1, SY2) avec roues coniques afférentes (R1, R2) et deux segments dentés méridiens (SZ1. SZ2) avec roues coniques afférentes (R3, R4) étant disposés symétriquement par rapport au point d'intersection (M) et les segments dentés (SY1, SY2; SZ1, SZ2), qui, respectivement deux par deux, attaquent le porte-objectif pivotant (OH), en pivotant dans le même sens, étant disposés vis-à-vis les uns des autres, et les roues coniques (R1 - R4) étant montées chacune sur une pointe de suspension (LS) dans un logement de palier (G) qui équipe le cadre de maintien (HR) et présente des ouvertures latérales (F1, F2, F3), ledit logement de palier (G) s'engageant, avec le patin de guidage(FK), étayant et guidant, dans la rainure de guidage (FN), qui est pratiquée dans une plaque à calotte sphérique afférente (KK1 - KK4), les segments dentés, méridiens SZ1, SZ2) étant formés, chacun, dans une des plaques à calotte sphérique y coordonnée (KK3, KK4), lesdites plaques à calotte sphérique, montées dans le porte-objectif (OH) étant uniquement pivotantes, tandis que les segments dentés, équatoriaux (SY1, SY2) sont formés, chacun, dans une des plaques à calotte sphérique (KK1, KK2), lesquelles, montées dans le porte-objectif (OH), peuvent pivoter dans le dispositif de guidage (SA), conçu en forme de cavité de compensation de pivotement, et peuvent être déplacées dans les sens méridien en compensation écliptique.

5. Dispositif de pivotement selon la revendication 1,
les segments dentés (SY1, SY2; SZ1, SZ2) étant entraînés à l'aide de roues coniques (R1 - R4) dont les axes et les flancs sont dirigés vers le point d'intersection (M), chacune d'elles étant montée, pivotante, dans un palier respectif, conçu en forme de coquille (L1, L2), et présentant une partie dentée qui s'engrène respectivement dans un segment denté (SS1 - SS4) dans une des bagues de commande (STY, STZ) qui sont montées coaxialement, pivotantes, dans une coquille de palier respective (L1, L2).

6. Dispositif de pivotement selon la revendication 5,
les deux bagues de commande (STY, STZ) s'engrenant chacune, par leur segment denté (ZSY, ZSZ), dans une roue dentée de commande respectuive (RY, RZ).

7. Dispositif de pivotement selon la revendication 6,
les roues dentées de commande (RY, RZ) étant reliées chacune, par l'intermédiaire d'un engrenage angulaire (WY, WZ) respectif, à un bouton de commande (KY, KZ) gradué, y coordonné respectivement.

8. Dispositif de pivotement selon l'une des revendications précédentes,
le cadre de maintien (HR) étant une monture ou le cadre frontal d'un appareil photographique professionnel et le dispositif de pivotement étant pourvu d'un système d'étancheité à la lumière.

9. Dispositif selon la revendication 8,
un soufflet ou un boîtier d'appareil photographique professionnel étant raccordé, amoviblement et étanche à la lumière, au cadre frontal ou à la monture.

10. Dispositif de pivotement selon l'une des revendications précédentes,
les deux angles de pivotement de l'objectif pivotant (O) étant chacun d'au moins +/- 15°.

11. Dispositif de pivotement selon l'une des revendications précédentes,
l'objectif pivotant (O) étant un objectif interchangeable.

12. Dispositif de pivotement selon l'une des revendications 5 à 11,
les coquilles des paliers (L1, L2), les bagues de commande (STY, STZ), le porte-objectif (OH) et/ou les plaques à calotte sphérique (KK1 - KK4) étant exécutés en matière plastique renforcée de fibres de verre ou coulées en métal léger.

13. Dispositif de pivotement selon la revendication 10,
les organes de commande de pivotement (KY, KZ) présentant chacun une démultiplication globale telle qu'un tour effectué par le bouton de commande (KY, KZ) corresponde approximativement à un pivotement du porte-objectif (OH) sur l'angle de pivotement maximal.

14. Dispositif de pivotement selon la revendication 1,
les bagues de commande (STY, STZ) étant plates et orientées radialement et leurs segments dentés (SS1, SS2; SS3, SS4) étant disposés sur des secteurs de couronne dentée (ZAY, ZAZ) perpendiculaires par rapport à eux, ces secteurs de couronne dentée (ZAY, ZAZ) formant chacun un engrenage angulaire avec la roue conique y coordonnée respectivement (R1 - R4).

15. Dispositif de pivotement selon la revendication 14,
dont les bagues de commande (STY, STZ) glissent l'une sur l'autre, les autres et sont respectivement montées, déplaçables circulairement, avec des secteurs de couronne dentée (ZAY, ZAZ) décalés circulairement par rapport l'un à l'autre, dans un évidement (A) de la coquille de palier (L1), lequel évidement (A) présente la forme d'un tronçon de cylindre radial, élargi, par secteur, parallèlement à l'axe.

16. Dispositif de pivotement selon la revendication 4,
une graduation (SAS), qui indique une mesure de la dérivation axiale, étant logée dans une cavité de compensation de pivotement (SA) .
